# EUROPEAN PATENT SPECIFICATION

(11) **EP 2 019 235 B1**
(45) Date of publication and mention of the grant of the patent: **11.01.2012**
(21) Application number: 08013283.0
(22) Date of filing: 23.07.2008
(51) Int. Cl.: F16H 61/32, F16H 63/18, F16D 1/08, F16D 7/02

(54) **Automated shift control device**
Steuerungseinrichtung für eine automatische Gangschaltung
Dispositif de commande de boîte de vitesse automatisée

(30) Priority: 24.07.2007 JP 2007191559
(43) Date of publication of application: 28.01.2009
(73) Proprietor: Yamaha Hatsudoki Kabushiki Kaisha, Shizuoka-ken Shizuoka 438-8501 (JP)
(72) Inventor: Takeuchi, Yoshihiko c/o Yamaha Hatsudoki Kabushiki Kaisha, Iwata-shi, Shizuoka-ken 438-8501 (JP)
(74) Representative: Grünecker, Kinkeldey, Stockmair & Schwanhäusser

(56) References cited:
- EP-A1- 1 329 651
- WO-A2-01/50041
- FR-A1- 2 823 275
- JP-A- 5 039 865
- US-A- 4 846 010

## Description

The present invention relates to an automated shift control device according to the preamble of independent claim 1. Such an automated shift control device can be taken from the prior art document EP 1 329 651 A1. Said document illustrates an actuating means for an automatic shift control device having an actuating motor and a planetary gear transmission attached to the output shaft of said motor. Between an output hub having the cylinder section and an input hub a spring steel band is arranged, which constitutes a torque limiting means for limiting torque that would be transmitted from the motor to the further actuating device. A basically comparable arrangement is also known from the further prior art document WO 01/50041 A2.

Vehicles including an automated shift control device for automatically switching speed change gears automatically have been known. Such an automated shift control device usually includes; a transmission having a plurality of pairs of speed change gears having transmission gear ratios that are different from one another and a gear selecting mechanism for selecting a pair to transmit power among the plurality of pairs to transmit power; a shift actuator for driving the gear selecting mechanism; and a shift power transmission mechanism for transmitting the power from the shift actuator to the gear selecting mechanism.

In a transmission having dog gears, the gears may sometimes not engage or disengage smoothly during gear shifting. In such a case, for example, in a foot-operated type transmission in which the gear selecting mechanism is driven via a shift pedal, operation by foot may be repeated several times so that the gears engage or disengage to complete the gear shifting operation. However, when it is desired to automatically perform such operation by means of an automated shift control device, it is necessary to appropriately control an input from the shift actuator in a complicated manner of control. On the other hand, when the situation in which the gears may not smoothly engage or disengage is left, there has been a problem that while the shift actuator is energized, rotation of the shift power transmission mechanism is restrained and therefore the shift actuator cannot rotate, making the shift actuator overloaded.

Accordingly, in Japanese Patent No. JP 3044498B2 & JP 50 39 865 A an automated shift control device has been proposed in which a coil spring is disposed between the shift actuator and the shift drum of the gear selecting mechanism. According to the automated shift control device of said document, in the case where the shift actuator is energized but rotation of the shift power transmission mechanism is restricted, the coil spring elastically deforms, and thus, overload of the shift actuator is prevent.

However, in order to prevent overload of the shift actuator by using elastic deformation of the coil spring, an elastic modulus of the coil spring is needed to set smaller. In other words, a compressive load when the coil spring elastically deforms (hereinafter, referred to as "compressive load of the coil spring") needed to set smaller. Specifically, the compressive load of the coil spring needed to set smaller so that operation of the shift actuator is allowed in a state that the shift power transmission mechanism stops.

However, the smaller the compressive load of the coil spring is, it becomes more difficult to disengage the dogs of the dog gears. Accordingly, there has arisen another problem that when the compressive load of the coil spring is set to be smaller, the engaged gears may not be smoothly disengaged to lengthen time from beginning to completion of the gear shifting operation.

On the other hand, when the compressive load of the coil spring is set to be larger, suppression of overload of the shift actuator as much as has been expected cannot be obtained. Therefore, prevention of overload by suppressing the torque of the shift actuator is additionally needed.

However, suppression of the torque of the shift actuator also reduce a rotational speed thereof. Therefore, in this case, the problem also arises that the time from beginning to completion of the gear shifting operation increases.

In view of the foregoing circumstance, an objective of the present invention is to provide an automated shift control device in which overload of a shift actuator is suppressed and time from beginning to completion of gear shifting operation is shortened.

According to the present invention, said objective is solved by an automated shift control device having the features of independent claim 1. Preferred embodiments are laid down in the dependent claims. Accordingly, it is provided an automated shift control device, comprising: a gear selecting mechanism configured to select a pair of gears of a transmission to transmit driving power from an input to an output of the transmission; a shift actuator configured to generate power to drive the gear selecting mechanism; a shift power transmission mechanism configured to transmit the power from the shift actuator to the gear selecting mechanism; and a torque limiter having a first rotating member to which the power from the shift actuator is transmittable and a second rotating member to which the power from the first rotating member is transmittable, the first rotating member co-rotating with the second rotating member to transmit the power from the shift actuator to the second rotating member as torque, when the torque to be transmitted to the second rotating member equals to or less than a predetermined limit torque, the first rotating member rotating relative to the second rotating member to limit the transmitted torque to the predetermined limit torque or less when the torque to be transmitted to the second rotating member exceeds the predetermined limit torque.

Here, the predetermined limit torque is a torque so as to avoid overload of the shift actuator. The limit torque may be arbitrarily set as long as the shift actuator is not overloaded. Conversely, when the transmitted torque is limited by defining a torque of a certain value as a boundary in the state that the shift actuator is not overloaded, the torque at the boundary corresponds to the limit torque. In other words, the limit torque may be the maximum limit of the torque transmitted by the shift power transmission mechanism above which the shift actuator may be overloaded, or may be a value below the maximum limit. The limit torque is determined according to the type of the shift actuator. The above-mentioned torque limiter can limit the transmitted torque to not more than the predetermined limit torque multiple times, rather than only once.

According to the above-mentioned automated shift control device, the torque limiter having the first rotating member and the second rotating member is provided. A first rotating member of the torque limiter co-rotates with a second rotating member when the torque to be transmitted to the second rotating member equals to or less than the predetermined limit torque, and rotates relative to the second rotating member when the torque to be transmitted to the second rotating member exceeds the predetermined limit torque. Therefore, even when the transmitted torque within the shift power transmission mechanism exceeds the predetermined limit torque for some reason, the first rotating member rotates relative to the second rotating member to limit the torque transmitted to the gear selecting mechanism to the predetermined limit torque or less. As a result, overload of the shift actuator is suppressed.

Herein, in the meaning of "limiting the transmitted torque to the limit torque or less", the torque may be limited to not more than the predetermined limit torque that is not zero, or may be limited to zero.

Moreover, according to the above-mentioned automated shift control device, while in order to limit overload of the shift actuator, the torque of the shift actuator itself is not suppressed and a torque limiter formed of an elastic member with a smaller elastic modulus is not used, it is possible to shorten the time from beginning to completion of the gear shifting operation. Therefore, it is possible to achieve prevention of overload of the shift actuator and reduction in time of the gear shifting operation at the same time.

Moreover, there can be provided an automated shift control device which suppresses overload of the shift actuator while reducing the time from beginning to completion of the gear shifting operation.

Preferably, the torque limiter is included in the shift power transmission mechanism.

Further, preferably the torque limiter is friction-based and/or engagement-based.

Still further, preferably the first rotating member and the second rotating member are in contact with each other.

Yet further still, preferably the first rotating member is configured to transmit power from the shift actuator to the second rotating member as torque due to frictional force generated between the first rotating member and the second rotating member, and when the torque to be transmitted to the second rotating member exceeds the predetermined limit torque, the first rotating member slips relative to the second rotating member.

Preferably, the first rotating member and the second rotating member are press-fitted to each other.

Further, preferably a layer having self-lubrication properties is formed between the first rotating member and the second rotating member.

Still further, preferably the layer is a sulphurized layer formed on a surface portion of the first rotating member and/or the second rotating member.

According to a preferred embodiment, the shift power transmission mechanism comprises a reduction mechanism having a plurality of shafts and a plurality of reduction gears which are, preferably, press-fitted to the respective shafts, the first rotating member is a reduction gear of the plurality of reduction gears, and the second rotating member is a shaft of the plurality of shafts to which the first rotating member is, preferably, press-fitted.

Preferably, the first rotating member is the most downstream reduction gear of the plurality of reduction gears.

Further, preferably, the first rotating member has the largest diameter among the plurality of reduction gears.

Still further, preferably the torque limiter includes a shaft as second rotating member and an actuating lever as first rotating member, preferably, press-fitted to the shaft.

According to another preferred embodiment, an angle sensor is configured to detect an angular position of the second rotating member, and, preferably, a stopper mechanism configured to restrict rotation of the second rotating member within a detection area of the angle sensor, the stopper mechanism preferably having a rotating part, preferably the actuating lever, that is attached to the second rotating member so as to co-rotate with the second rotating member, and a stationary part that is formed separately from the rotating part and abuts to the rotating part to restrict rotation of the second rotating member within a predetermined angular range.

There is also provided a vehicle, in particular a straddle-type vehicle such as a motorcycle, comprising a transmission and an automated shift control device according to one of the above embodiments.

In the following, the present invention is explained in greater detail by means of embodiments thereof in conjunction with the accompanying drawings, wherein:
- Fig. 1: is a side view of a motorcycle;
- Fig. 2: is a side view showing an arrangement of an actuator of an automated shift control device;
- Fig. 3: is a cross-sectional view of an engine;
- Fig. 4: is an exploded cross-sectional view of a shift motor and a shift power transmission mechanism;
- Fig. 5: is an enlarged view of a shift actuator unit and an actuating lever of Fig. 4;
- Fig. 6: is an enlarged cross-sectional view showing a press-fitted portion of a third shaft of Fig. 5;
- Fig. 7: is a side view of a clutch actuating unit;
- Fig. 8: is a side view of the clutch actuating unit;
- Fig. 9: is an enlarged side view of a shift rod and thereabout;
- Fig. 10: is a system chart of an automated transmission control device;
- Fig. 11: is a perspective view of a switch portion on a handle grip;
- Fig. 12: is a correlation diagram of a transmitted torque and a slip speed in which the torque to be transmitted by the shift power transmission mechanism is on an abscissa and a relative speed of third reduction gear and a third shaft is on an ordinate; and
- Fig. 13 (a) (b): are diagrams showing operation of the torque limiter according to a variation not covered by the independent claim.

Among others, the following reference signs are used in the figures:
1 motorcycle (straddle-type vehicle)
31 crankshaft
32 crankcase
40 transmission
41 main shaft
42 drive shaft
43 gear selecting mechanism
44 clutch mechanism
49 speed change gear
50 automated shift control device
70 shift motor (shift actuator)
70a motor shaft
70d gear
80 shift power transmission mechanism
81 reduction mechanism
81 a first shaft
81 b second shaft
81 c third shaft (second rotating member, shaft)
81e first reduction gear
81f second reduction gear
81 g third reduction gear (first rotating member, reduction gear)
81 p press-fitted portion
81 x sulphurized layer
82 shift rod
83 shift link mechanism
84 actuating lever (rotating part)
85 actuating lever
87 stopper mechanism
88 torque limiter
89 stopper member (stationary part)
95 engine controller
420 speed change gear
421 shift cam (gear selecting mechanism)
422 shift fork (gear selecting mechanism)

Hereinafter, embodiments will now be described in detail with reference to the drawings.

In the following, embodiments of a straddle-type vehicle will be described. While the following embodiments present the most preferred aspects, the technical teaching is not limited thereto. While the straddle-type vehicle of the following embodiments is a motorcycle, the straddle-type vehicle is not limited thereto and may be three-wheeled vehicles, buggy type vehicles, and the like. In general, a straddle-type vehicle has a body frame and a seat on which a rider can be seated straddling the body frame when being seated.

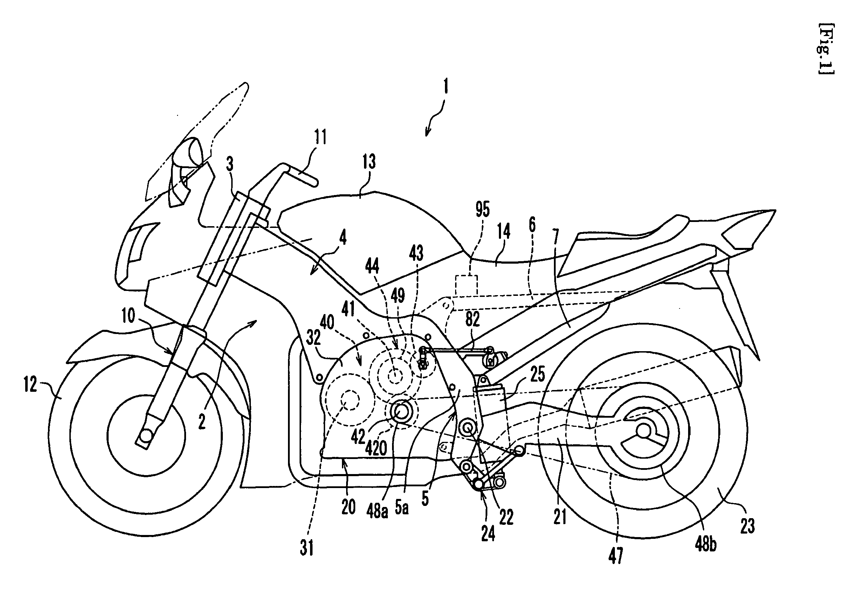

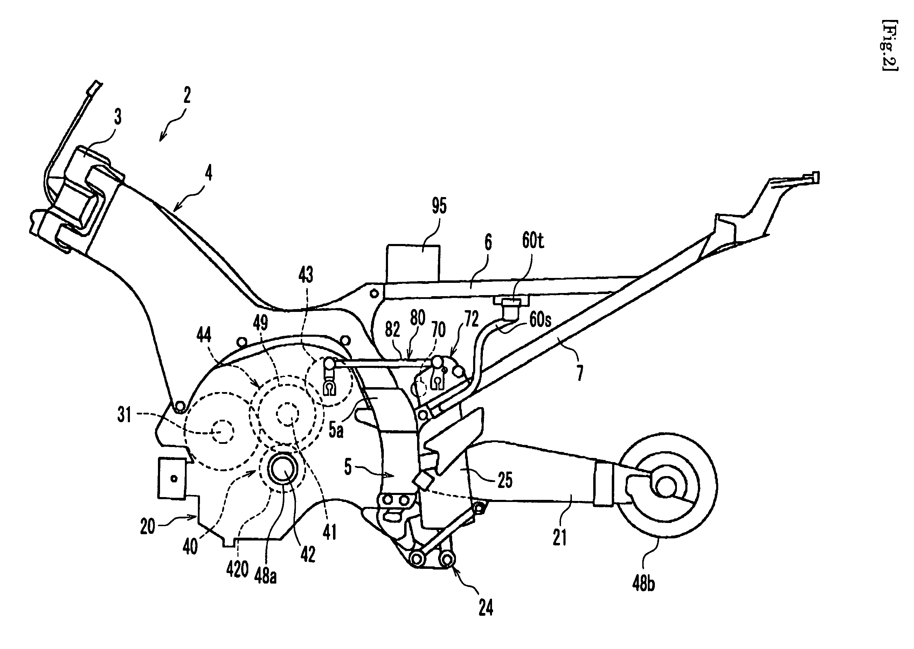

As shown in Figs. 1 and 2, a motorcycle 1 according to the present embodiment includes a head pipe 3 and a body frame 2. The body frame 2 includes at least a main frame 4 extending rearward from the head pipe 3 and a rear-arm bracket 5 extending downwardly from the rear of the main frame 4. A back stay 7 is attached to the upper part 5a of the rear-arm bracket 5. The rear part of a seat rail 6 and the rear part of the back stay 7 are connected to each other.

A front fork 10 is pivoted in the head pipe 3. At the upper end of the front fork 10, a steering handle 11 is disposed; at the lower end, a front wheel 12 is disposed. A fuel tank 13 is disposed on the main frame 4, a seat 14 is disposed behind the fuel tank 13. The seat 14 is placed on the seat rail 6.

The rear-arm bracket 5 supports the front end of a rear arm 21 through a pivot shaft 22 so as to allow the rear arm 21 to swing up and down. At the rear end of the rear arm 21, a rear wheel 23 is supported. The rear arm 21 is supported by the body frame 2 through a link mechanism 24 and a rear shock absorber 25.

An engine 20 is suspended across the main frame 4 and the rear-arm brackets 5. While the engine 20 in the present embodiment is of a water-cooled, four-cycle parallel four-cylinder type, the type of the engine 20 is not limited. The engine 20 is disposed so that cylinder axes (not shown) thereof are oriented toward the front of the vehicle and slightly oblique to a horizontal plane. A crankcase 32 containing a crankshaft 31 is suspended on both sides of the body frame 2 in a width direction of the vehicle.

A main shaft 41 is provided in parallel to the crankshaft 31. The crankshaft 31 is connected to the main shaft 41 via a clutch mechanism 44 of a multiple-disc type. Details of a configuration of the clutch mechanism 44 will be described later.

On the main shaft 41, multistage speed change gears 49 of different diameters are mounted. A drive shaft 42 is disposed parallel to the main shaft 41, and speed change gears 420 corresponding to the speed change gears 49 are mounted on the drive shaft 42. Each speed change gear 49 on the main shaft 41 meshes with the corresponding speed change gear 420 mounted on the drive shaft 42. The speed change gears 49 and 420 are mounted so that either or both of the speed change gears 49 and 420 except for one selected pair freely rotate (idly rotate) relative to the main shaft 41 or the drive shaft 42. In this way, rotation is transmitted from the main shaft 41 to the drive shaft 42 through only the selected single pair of the speed change gears.

In the present embodiment, a transmission 40 is formed of the main shaft 41, the drive shaft 42, the pairs of the speed change gears 49 and 420, as well as a gear selecting mechanism 43 which selects one pair to transmit the power among the pairs of the speed change gears 49 and 420. The transmission 40 is integrally assembled into the crankcase 32. Via selected and engaged gears 49, 420, the transmission 40 transmits driving power from its input side to its output side.

As show in Fig. 2, the motorcycle 1 includes a shift motor 70 for generating the power to drive the gear selecting mechanism 43 of the transmission 40 and a shift power transmission mechanism 80 for transmitting torque generated by the shift motor 70 to the gear selecting mechanism 43.

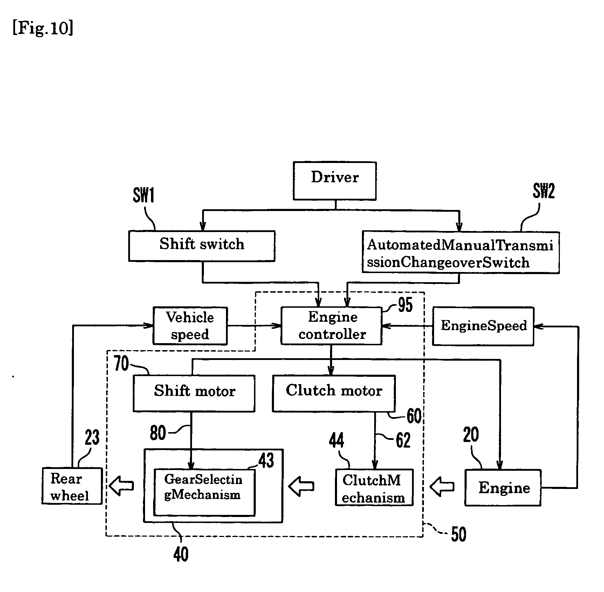

The motorcycle 1 according to the present embodiment includes an automated manual transmission mechanism 50 (see Fig. 10, and hereinafter, referred to as "an automated shift control device 50") which automatically actuates the clutch mechanism 44 and switches the speed change gears of the transmission 40. Details of a configuration of the automated shift control device 50 will be described later.

As shown in FIG. 1, a drive sprocket 48a is provided on the drive shaft 42. On the rear wheel 23, a driven sprocket 48b is provided. A chain 47 extends between the drive sprocket 48a and the driven sprocket 48b. Thus, the power of the engine 20transmitted to the drive shaft 42 through the transmission 40 is transmitted to the rear wheel 23 through the chain 47.

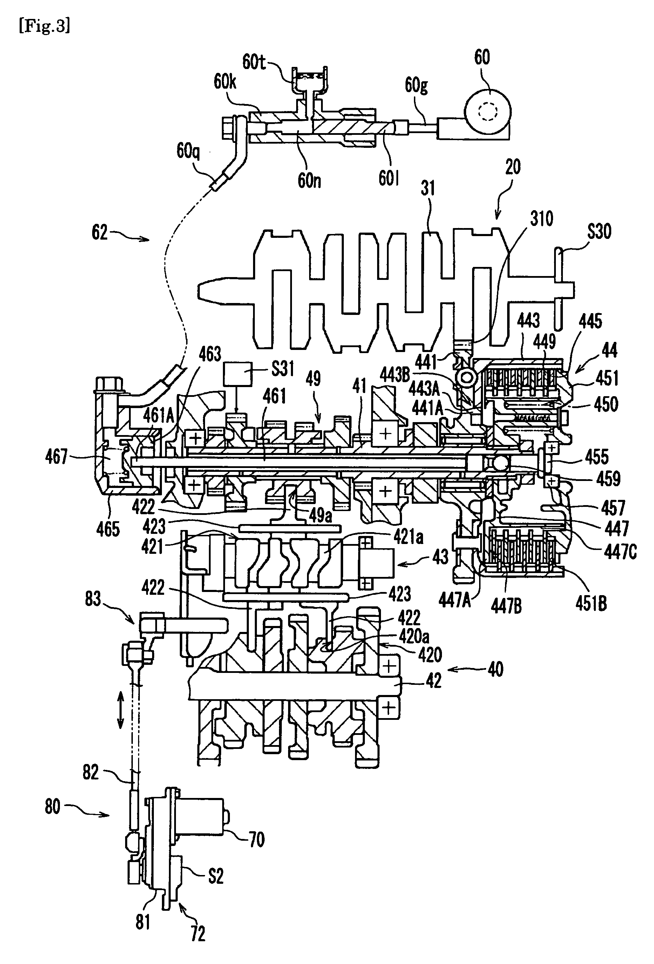

The general configuration of the motorcycle 1 has been described. The clutch mechanism 44 will now be described in detail with reference to Fig. 3.

The clutch mechanism 44 in the present embodiment is a multiple-disc friction clutch, and includes a clutch housing 443 of a cylindrical shape, a clutch boss 447 of a cylindrical shape, a plurality of friction discs 445 and clutch plates 449 serving as friction discs, and a pressure plate 451. The clutch mechanism 44 also includes a gear 441 which meshes with a gear 310 formed on the crankshaft 31. At one end of the crankshaft 31, an engine rotational speed sensor S30 is mounted. The main shaft 41 is provided with a main shaft rotational sensor S31.

The clutch housing 443 is mounted on the main shaft 41 so as to allow relative rotation. The clutch housing 443 is formed to have a cylindrical shape. At one end of the clutch housing 443 (on the left in Fig. 3), an engaging portion 443B having an engaging hole 443A is provided. An engaging projection 441A of the gear 441 fits into the engaging hole 443A so that the gear 441 and the clutch housing 443 are engaged with each other to prevent relative rotation. The inner surface of the cylindrical portion of the clutch housing 443 is formed with a plurality of grooves extending in an axial direction of the main shaft 41.

The friction discs 445 are each formed to be a ring-shaped thin plate. Each of the friction discs 445 has a plurality of teeth formed on an outer rim of the friction discs 445. Each of the friction discs 445 is attached to the clutch housing 443 so that the plurality of teeth formed on the outer rim of the friction discs 455 engage with the plurality of grooves formed on inner surface of the clutch housing 443, disabling relative rotation. Each friction disc 445 is slidably attached to the clutch housing 443 in the axial direction of the main shaft 41. Each friction disc 445 is attached to the clutch housing 443 such that a face of the friction disc 445 is approximately perpendicular to the axial direction of the main shaft 41.

The clutch boss 447 is disposed inward in a radial direction of the clutch housing 443 in respect to the main shaft 41, and attached to the main shaft 41 so as not to allow relative rotation. The clutch boss 447 is formed to have a cylindrical shape. At one end of the clutch boss 447 (on the left in Fig. 3), a disc-like flange portion 447A is provided, the disc-like flange portion 447A having an outer diameter that is approximately equal to that of the clutch plates 449. The clutch boss 447 is fixed to the main shaft 41 such that the flange portion 447A is located on the side of the engaging portion 443B of the clutch housing 443. On the side of the clutch plates 449 of the flange portion 447A, a pressing member 447B is formed to sandwich the friction discs 445 and the clutch plates 449 in the axial direction of the main shaft 41 together with the pressure plate 451. The outer surface of the cylindrical portion of the clutch boss 447 is formed with a plurality of grooves 447C extending in the axial direction of the main shaft 41.

The clutch plates 449 are each formed to be a ring-shaped thin plate. An inner rim of the clutch plate 449 is formed with a plurality of teeth. Each of the clutch plates 449 are attached to the clutch boss 447 such that the teeth formed on the inner rims of the clutch plates 449 engage with the plurality of grooves 447C formed on the outer surface of the clutch boss 447, thereby, disabling relative rotation. Each of the clutch plates 449 is slidably attached to the clutch boss 447 in the axial direction of the main shaft 41. Each of the clutch plates 449 is mounted to the clutch boss 447 such that a face of the clutch plate 449 is approximately perpendicular to the axial direction of the main shaft 41.

The friction discs 445 and the clutch plates 449 are arranged alternately in the axial direction of the main shaft 41.

The pressure plate 451 is provided to slide relative to the clutch boss 447 in the axial direction of the main shaft 41, but not to rotate relative to the clutch boss 477. The pressure plate 451 is driven by a clutch motor 60. The pressure plate 451 is formed with a plate-like pressing member 451 B to sandwich the friction discs 445 and the clutch plates 449 in the axial direction of the main shaft 41 together with the pressing member 447B of the flange portion 447A.

In the clutch mechanism 44, a plurality of springs 450 are provided to respectively surround a plurality of cylindrical grooves 447C. Each of the springs 450 biases the pressure plate 451 to the left in Fig. 3. In other words, each of the springs 450 biases the pressure plate 451 in a direction in which the pressing member 451 B of the pressure plate 451 comes close to the pressing member 447B of the clutch boss 447.

The center of the pressure plate 451 is engaged with one end of a push rod 455 (on the right in Fig. 3), for example, through a bearing such as a deep-groove ball bearing 457, so that the pressure plate freely rotates relative to the push rod 455. The other end of the push rod 455 (on the left in Fig. 3) is engaged with an inside of the end of the cylindrical main shaft 41. Inside the cylindrical main shaft 41, a spherical ball 459 is provided next to the other end (the left end) of the push rod 455, and additionally, a push rod 461 is provided next to the ball 459, at a left side of the ball 459.

One end (left end) 461A of the push rod 461 projects from the other end (left end) of the cylindrical main shaft 41. The projecting end 461A of the push rod 461 is integrated with a piston 463 that is connected to the clutch motor 60. The piston 463 is guided by a cylinder body 465 to freely slide in the axial direction of the main shaft 41.

The configuration of the clutch mechanism 44 has been described. The gear selecting mechanism 43 and the shift power transmission mechanism 80 will now be described in detail.

As shown in Fig. 3, the gear selecting mechanism 43 includes a shift cam 421 serving as a shift input shaft, as well as shift forks 422. A plurality of cam grooves 421 a are formed on the outer surface of the shift cam 421. The shift fork 422 has a shape branched from the root into two tips. The root of the shift fork 422 is slidably attached to a shift fork shaft 423 in the axial direction of the shaft. One tip of the shift fork 422 engages with the cam groove 421 a of the shift cam 421. The other tip of the shift fork 422 engages with annular grooves 49a and 420a provided on the speed change gears 49 and 420.

With such a configuration, when the shift cam 421 is driven to rotate, the shift forks 422 move axially along the cam groove 421 a, to axially move the speed change gears 49 and 420. In this way, only a pair of the speed change gear 49 and the speed change gear 420 is s , respectively fixed to the main shaft 41 and the drive shaft 42 by splines. The position of the speed change gears is thus determined, and transmission of rotation between the main shaft 41 and the drive shaft 42 is executed at a specified speed change ratio via the speed change gear 49 and the speed change gear 420.

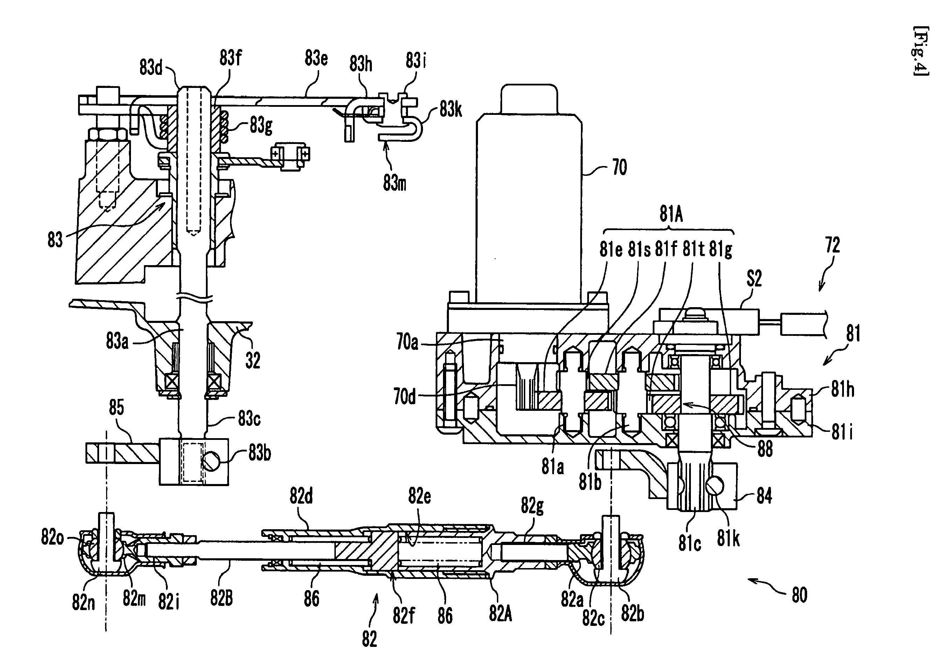

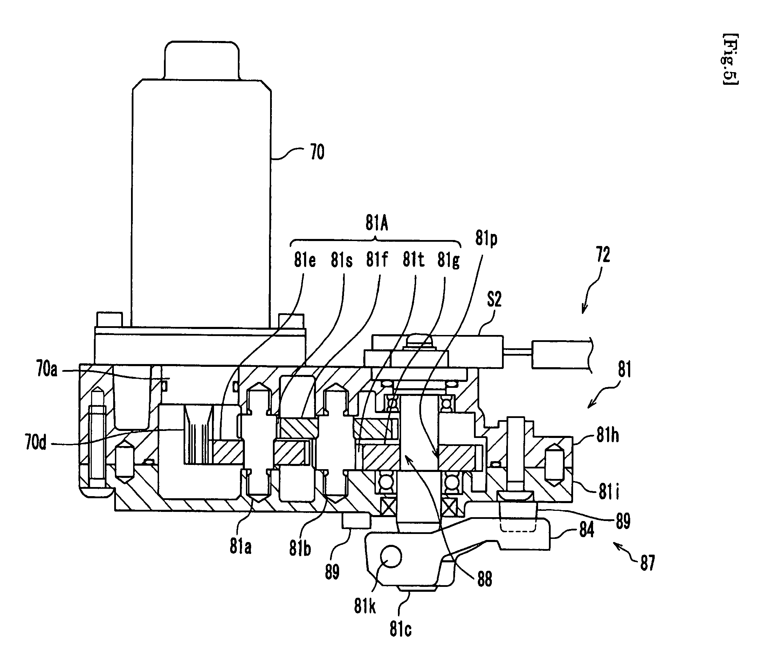

As shown in Fig.4, the shift power transmission mechanism 80 includes a reduction mechanism 81 for reducing the speed of the shift motor 70, a shift rod 82, and a shift link mechanism 83. While in the present embodiment, the shift motor 70 of an electric type is used as a shift actuator, a hydraulic actuator may be used as the shift actuator. As shown in Fig. 5, the shift motor 70 in the present embodiment, as well as a shift position detecting device S2 and the reduction mechanism 81, is integrated as the shift actuator unit 72. Integration of the shift motor 70 and the reduction mechanism 81 as the shift actuator unit 72 facilitates assembling, maintenance, and the like.

As shown in Fig. 5, the reduction mechanism 81 in the present embodiment includes four shafts 70a, 81a, 81b, and 81c and three reduction gears 81e, 81f, and 81g. The reduction mechanism 81 is housed within gear cases 81 h and 81 i.

The first of the four shafts is formed of the motor shaft 70a of the shift motor 70. The second to fourth of the four shafts are respectively formed of a first shaft 81 a, a second shaft 81 b and a third shaft 81 c. The first shaft, i.e., the motor shaft 70a forms an input shaft of the reduction mechanism 81. At one end of the motor shaft 70a, a gear 70d is formed. The fourth shaft, i.e., the third shaft 81 c forms a drive shaft (output shaft) of the reduction mechanism 81.

A first reduction gear 81 e is press-fitted to the first shaft 81 a. The first reduction gear 81 e is disposed to engage with the gear 70d of the motor shaft 70a. The first shaft 81 a has a gear 81 s formed thereon.

A second reduction gear 81f is press-fitted to the second shaft 81b. The second reduction gear 81f is disposed to engage with the gear 81s of the first shaft 81 a. The second shaft 81 b has a gear 81 t formed thereon.

A third reduction gear 81 g is press-fitted to the third shaft 81 c. The third reduction gear 81 g is disposed to engage with the gear 81 t of the second shaft 81 b.

In this way, the first reduction gear 81 e, the gear 81 s, the second reduction gear 81f, the gear 81t and the third reduction gear 81 g form a reduction gear train 81 A which reduces the rotation of the shift motor 70. The first reduction gear 81e at the most upstream side of the reduction gear train 81A engages with the gear 70d. With this arrangement, the torque of the shift motor 70 is transmitted to the reduction gear train 81 A via the gear 70d and increased.

In the present embodiment, the third reduction gear 81g and the third shaft 81c form a torque limiter 88. The torque limiter 88 limits overload of the shift motor 70 by restricting rotation of the shift power transmission mechanism 80, for example, when the speed change gears 49 and 420 do not smoothly engage or disengage. In this embodiment, the torque limiter 88 is friction-based.

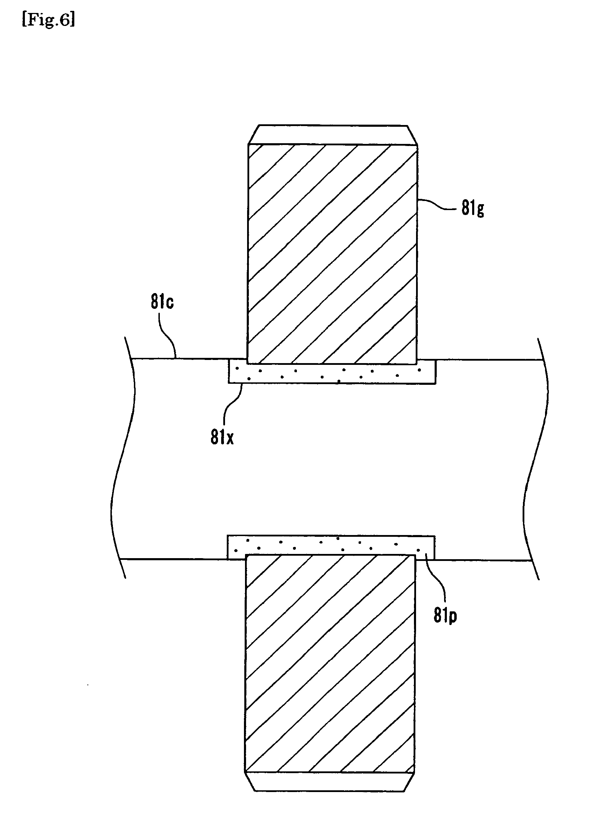

Specifically, a surface of a press-fitted portion 81 p of the third shaft 81 c to which the third reduction gear 81g is press-fitted is corbett-treated (i.e., sulphurized at a low temperature) to form a sulphurized layer 81x having self-lubrication properties on the surface of a press-fitted portion 81 p, as shown in Fig. 6. In general, said layer is formed between the third shaft 81 c and the third reduction gear 81 g. Said layer may be formed on a surface portion of the third reduction gear 81 g and/or the third shaft 81 c. Then, the third reduction gear 81 g is press-fitted to the third shaft 81 c so as to co-rotate with the third shaft 81c when the torque to be transmitted by the shift power transmission mechanism 80 is not more than a predetermined limit torque L, and so as to slip (i.e., relatively rotate) relative to the third shaft 81 c when torque to be transmitted by the shift power transmission mechanism 80 exceeds the predetermined limit torque L. Specifically, when the torque to be transmitted by the shift power transmission mechanism 80 is not more than the predetermined limit torque L, the third reduction gear 81 g co-rotates with the third shaft 81 c owing to the frictional force caused between the third reduction gear 81g and the third shaft 81c. In other words, the third reduction gear 81 g and the third shaft 81c rotate at the same rotational speed. On the other hand, when the torque to be transmitted by the shift power transmission mechanism 80 exceeds the predetermined limit torque L, against the frictional force generated between the third reduction gear 81g and the third shaft 81 c, the third reduction gear 81g slips relative to the third shaft 81 c. In other words, the third reduction gear 81g and the third shaft 81 c relatively rotate.

The first reduction gear 81e and the second reduction gear 81f have a press-fitted interference (i.e., diameter of the shaft / diameter of the pres-fitted gear) greater than that of the third reduction gear 81 g. With the greater interference, holding torque increases, and the torque when relative rotation stars also increases. Accordingly, even when the torque to be transmitted by the shift power transmission mechanism 80 exceeds the predetermined limit torque L, the first reduction gear 81e and the second reduction gear 81f do not rotate relative to the first shaft 81 a and the second shaft 81 b, respectively.

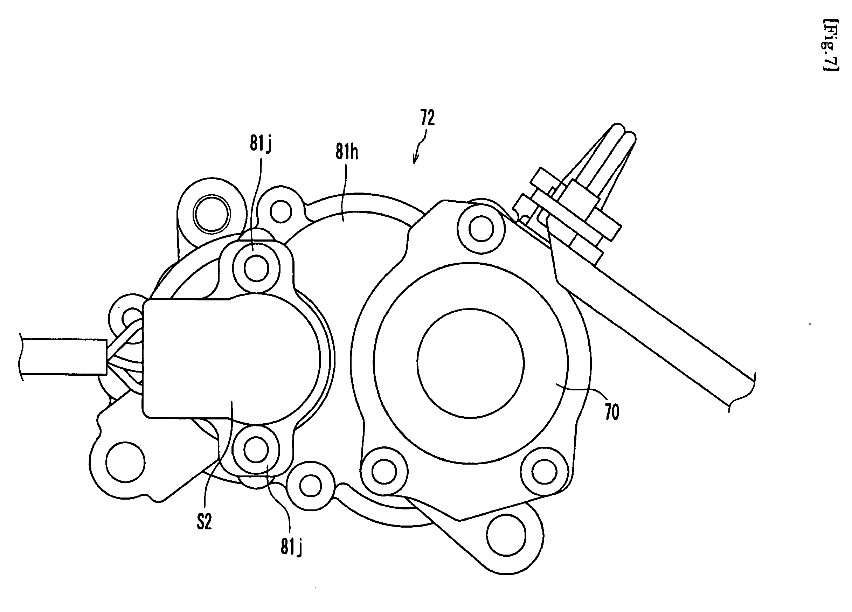

As shown in Fig. 5, the shift position detecting device S2 is disposed at one end of the third shaft 81 c which is the drive shaft (i.e. output shaft) of the reduction mechanism 81. The shift position detecting device (angle sensor) S2 is disposed at the end of the third shaft 81 c and fastened to the gear case 81 h with attaching bolts 81 j as shown in Fig.7.

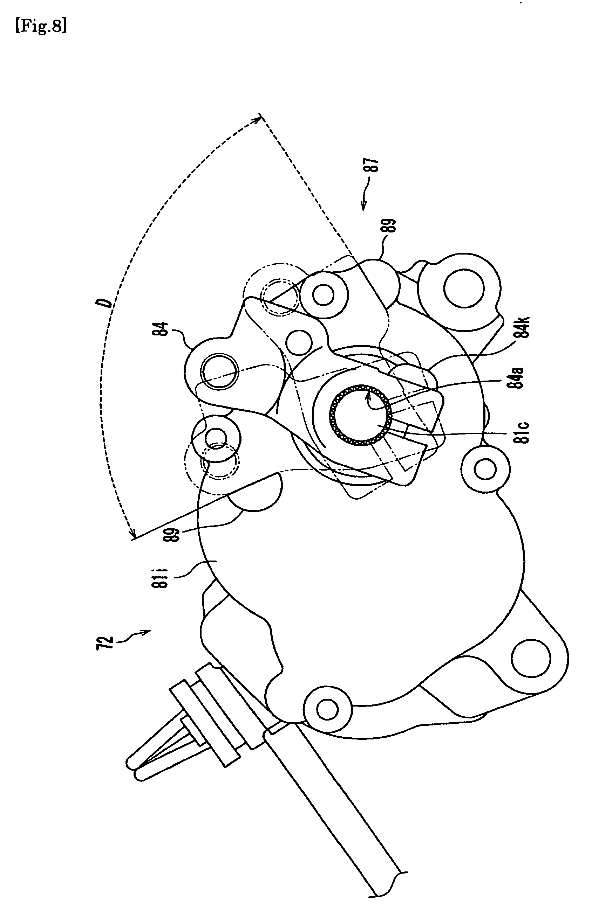

As shown in Fig. 5, an actuating lever 84 is secured to the other end of the third shaft 81 c. Specifically, as shown in Fig.8, the actuating lever 84 is provided with an engaging bore 84a which engages with the third reduction shat 81c, and the engaging bore 84a and the third shaft 81 c has a serration formed thereon. The actuating lever 84 is secured to the third shaft 81c by meshing the serration of the third shaft 81 c with that of the actuating lever 84 and fastening a bolt 81 k. By thus securing, the actuating lever 84 is made impossible to relatively rotate relative to the third shaft 81 c. Consequently, upon rotation of the third shaft 81c which is the drive shaft (i.e., output shaft) of the reduction mechanism 81, the actuating lever 84 swings.

Stopper members 89 and 89 which restrict swing of the actuating lever 84 within a predetermined angular range D are attached to the gear case 81 i. The stopper member 89 and 89 together with the actuating lever 84 form a stopper mechanism 87. The stopper mechanism 87 restricts swing of the actuating lever 84 within the predetermined angular range D to restrict rotation of the third shaft 81 c to an angular position out of the sensing region of the shift position detecting device (angle sensor) S2.

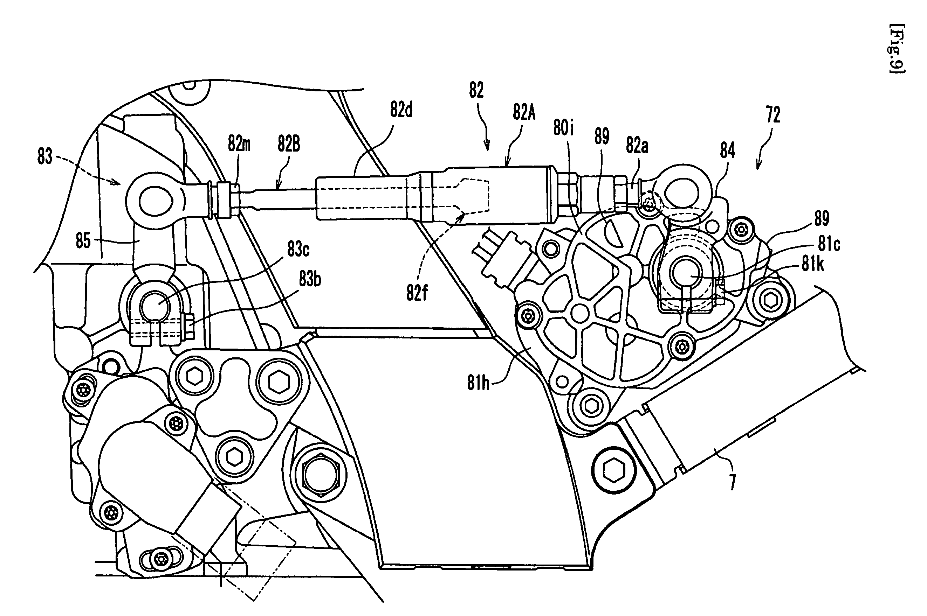

As show in Figs. 4 and 9, a connecting portion 82a of the shift rod 82 at the shift motor side is connected to the actuating lever 84 via a bolt 82b (see Fig. 4). As shown in Fig. 4, the connecting portion 82a at the shift motor side is supported by a bearing 82c and freely rotatable with respect to the bolt 82d. Thus, swing of the actuating lever 84 moves the shift rod 82 in a longitudinal direction of the rod.

As show in Figs. 4 and 9, the shift rod 82 includes the connecting portion 82a at the shift motor side, a first rod body 82A, a second rod body 82B and a connecting portion 82m at the shift link mechanism side. A portion of the first rod body 82A at the shift link mechanism side is formed of a tubular body 82d. As shown in Fig. 4, inside of the tubular body 82d, a step 82e with a larger diameter than that of other parts is formed. On the other hand, the second rod body 82B is formed with a larger diameter portion 82f having a diameter larger than that of other parts at the end of the shift motor. The second rod body 82B is inserted into the tubular body 82d so that the larger diameter portion 82f is housed within the step 82e of the first rod body 82A. Coil springs 86 are provided inside the tubular body 82 and at both axial sides of the larger diameter portion 82f. The coil springs 86 elastically support the larger diameter portion 82f.

The end of the first rod body 82A at the shift motor side (on the right of Fig. 4) is screwed to a threaded portion 82g of the connecting portion 82a at the shift motor side. To the contrary, the end of the second rod body 82B at the shift link mechanism side (on the left of Fig. 4) is screwed to a threaded portion 82i of the connecting portion 82m at the shift link mechanism side. Upon rotation of the first rod body 82A or the second rod body 82B, a screwing length of the threaded portion 82g or the threaded portion 82i is varied so that the length of the shift rod 82 can be adjusted. Thus, the length of the shift rod 82 may easily be adjusted merely by rotating the first rod body 82A or the second rod body 82B. This makes it possible to select the position of the shift motor 70 more freely. The structure by which the length of the shift rod 82 may be adjusted is not limited to that shown in Fig. 4 and any of different structures may be employed.

The connecting portion 82m of the second rod body 82B at the shift link mechanism side is connected to an actuating lever 85 by a bolt 82n. The connecting portion 82m at the shift link side is supported by a bearing 82o and freely rotatable with respect to the bolt 82n. Thus, the movement of the shift rod 82 in the longitudinal direction thereof causes swing of the actuating lever 85.

The actuating lever 85 is secured to a shift actuating shaft 83a of the shift link mechanism 83. Specifically, in the actuating lever 85, an engaging bore which engages with the shift actuating shaft 83a is provided. In each of the engaging bore and shift actuating levers 83a, a serration is formed. The actuating lever 85 is secured to the shift actuating shaft 83a by meshing the serration of the actuating lever 85 with that of the shift actuating shaft 83a and fastening a bolt 83b. By thus securing, the actuating lever 85 is made it impossible to relatively rotate relative to the shift actuating shaft 83a. Consequently, when the actuating lever 85 swings, the shift actuating shaft 83a rotates.

The shift link mechanism 83 is disposed within the crankcase 32 and has the above-mentioned shift actuating shaft 83a. As described above, the actuating lever 85 is fixed to the end 83c of the shift actuating shaft 83. A link lever 83e is attached to the other end 83d of the shift actuating shaft 83a not to relatively rotate. A holder 83f is attached inward from the link lever 83e of the other end 83d of the shift actuating shaft 83a, and a coil spring 83g is wound around the outer surface of the holder 83f. A support shaft 83i is attached to one end 83h of the link lever 83e. A pawl 83k is freely rotatably attached to the support shaft 83i. With such a configuration, rotation of the shift actuating shaft 83a swings the link lever 83e. As a result, an engaging part 83m of the pawl 83k pushes a pin (not shown) at the end of the shift cam 421 (see Fig. 3) to rotate the shift cam 421. The coil spring 83g supports and biases the pawl 83k to the neutral position thereof.

The configuration of the gear selecting mechanism 43 and the shift power transmission mechanism 80 have been described above. The automated shift control device 50 will now be described.

As show in Fig. 10, the automated shift control device 50 actuates the clutch mechanism 44 and automatically switches the speed change gears of the transmission 40. The automated shift control device 50 includes an engine controller 95, the clutch motor 60 for driving the clutch mechanism 44, a clutch power transmission mechanism 62 (see Fig. 3) for transmitting the power from the clutch motor 60 to the clutch mechanism 44, the shift motor 70 for driving the gear selecting mechanism 43 of the transmission 40, the shift power transmission mechanism 80 for transmitting the power from the shift motor 70 to the gear selecting mechanism 43, and other components (various sensors) necessary for automated shift control (the automated manual transmission).

Now, the system of the automated shift control device 50 will be described.

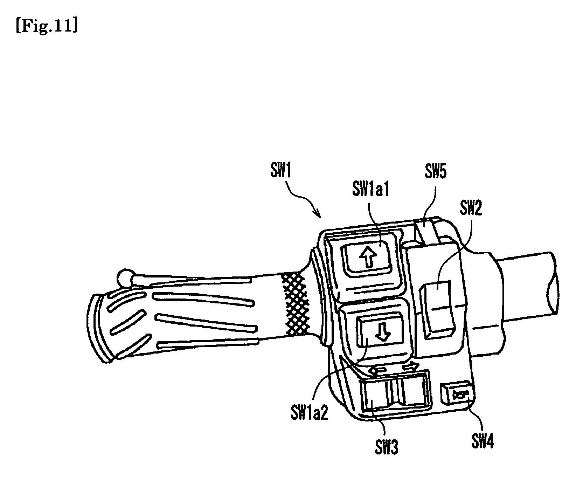

As shown in FIG. 11, a steering handle 11 has, for example, a shift switch SW1 on the left grip. The shift switch SW1 is formed of, for example, a shift-up switch SW1a1 and a shift-down switch SW1 a2, and changes the shift position of the speed change gear between a first to a highest speed (e.g., sixth speed) as appropriate by manual operation of a driver. On the left grip, a changeover switch SW2, an indicator switch SW3, a hom switch SW4, and a light switch SW5 are also provided. A changeover switch SW2 switches the gear shifting operation between a semi-auto mode and a full-auto mode.

Now, the operation of the gear selecting mechanism 43 and the clutch mechanism 44 during the gear shifting by way of the automated shift control device 50 will be described below.

As shown in FIG. 10, the switching of the gear selecting mechanism 43 and the clutch mechanism 44 is executed by the automated shift control device 50. In the motorcycle 1, various sensors, such as a clutch position detecting device of the clutch motor 60 (not shown) and a speed sensor, in addition to the shift position detecting device S2 of the shift motor 70 are provided.

First, the switching of the gear selecting mechanism 43 and the clutch mechanism 44 starts when the shift switch SW1 is operated by a driver. An engine controller 95 drives the clutch motor 60 and the shift motor 70 based on data detected by the various sensors and an instruction of the shift switch SW1. Specifically, the engine controller 95 automatically performs a series of shift operation of disconnection of the clutch mechanism 44, switching of the speed change gear of the transmission 40, and connection of the clutch mechanism 44 according to a predetermined program stored in advance in the engine controller 95 and by other arithmetic circuits. The gear shifting operation will now be described in greater detail.

First, disconnection of the clutch mechanism 44 will be described.

At first, the engine controller 95 drives and rotates the clutch motor 60 based on the instruction from the shift switch SW1. Then, an output shaft 60g moves to the left in FIG. 3. As a result, a piston 60l of a cylinder 60k is pushed to the left in FIG. 3 so that oil present in an oil chamber 60n passes through an oil hose 60q into a space 467 surrounded by the cylinder body 465 and the piston 463. When the oil is supplied to the space 467, the piston 463 moves to the right in FIG. 3. The oil chamber 60n communicates with a reserve tank 60t through a reserve hose 60s (see FIG. 2).

Rightward movement of the piston 463 causes the pressure plate 451 to be pushed in the rightward direction in Fig.3 via the push rod 461, the ball 459, the push rod 455, and the deep-groove ball bearing 457. When the pressure becomes larger than the force with which the springs 450 bias the pressure plate 451 to the left in FIG. 3, the pressure plate 451 moves to the right in FIG. 3. Thus, the pressing member 451 B of the pressure plate 451 is separated from the friction discs 445. As a result, contact between each friction disc 445 and each clutch plate 449 is released so that no frictional force to transmit the torque is generated between each friction disc 445 and each clutch plate 449. In this way, the clutch mechanism 44 is disconnected.

Upon disconnection of the clutch mechanism 44, shifting of the speed change gears of the transmission 40 is subsequently performed. The shifting operation of the speed change gears will be described below.

Upon disconnection of the clutch mechanism 44, the engine controller 95 drives and rotates the shift motor 70 while keeping the clutch mechanism 44 disconnected. As a result, the gear 70d of the motor shaft 70a rotates. As shown in Fig. 4, rotation of the gear 70d causes the first reduction gear 81 e, the first shaft 81 a, the gear 81 s, the second reduction gear 81f, the second shaft 81 b, the gear 81 t and the third reduction gear 81 g to be interlocked in a sequential order and rotate. As a result, the third shaft 81 c which is the drive shaft (i.e., output shaft) of the reduction mechanism 81 rotates.

As shown in Fig.4, the shift position detecting device S2 is attached to the end of the third shaft 81c. The shift position detecting device S2 determines position information based on the rotation of the third shaft 81 c and sends the position information to the engine controller 95. The engine controller 95 controls the shift motor 70 based on the above-mentioned position information.

When the third shaft 81 c rotates, the actuating lever 84 swings, and when the actuating lever 84 swings, the shift rod 82 moves in the longitudinal direction of the rod. When the shift rod 82 moves, the actuating lever 85 swings; when the actuating lever 85 swings, the shift actuating shaft 83a rotates. Then, when the shift actuating shaft 83a rotates, the link lever 83e swings, and the shift cam 421 rotates by a predetermined angle via the engaging part 83m of the pawl 83k.

As shown in Fig. 3, the rotation of the shift cam 421 causes the shift forks 422 to move along the cam grooves 421a in the axial direction of the cam by a predetermined amount. This axial movement of the shift forks 422 causes a pair of the speed change gear 49 and the speed change gear 420 to be fixed subsequently to the main shaft 41 and to the drive shaft 42. According to the above-mentioned operation, the pair of the speed change gears to transmit the driving power is selected and switched. Thus, the rotational driving power transmitted to the main shaft 41 is transmitted to the drive shaft 42 in the predetermined transmission gear ratio.

Occasionally, the transmission 40 may not operate because, for example, the speed change gears 49 and 420 do not smoothly engage or disengage, so that the shift power transmission mechanism 80 cannot transmit the torque from the shift motor 70 to the transmission 40 even when the shift motor 70 drives. In such cases, an excessive torque may be generated in the shift power transmission mechanism 80 and the shift motor 70 is overloaded.

However, the automated shift control device 50 of the motorcycle 1 includes the torque limiter 88. Therefore, it is possible to suppress overload of the shift motor 70. Specifically, when the torque to be transmitted by the shift power transmission mechanism 80 exceeds the predetermined limit torque L, against the frictional force generated between the third reduction gear 81g and the third shaft 81c, the third reduction gear 81 g slips relative to the third shaft 81 c. In other words, the third reduction gear 81 g rotates relative to the third shaft 81c. As a result, the torque applied to the shift power transmission mechanism 80 is relieved and the load on the shift motor 70 is suppressed.

The predetermined limit torque L is selected so as not to overload the shift motor 70. According to the present embodiment, the limit torque L is set to the maximum torque transmitted by the shift power transmission mechanism 80. However, it is possible to set the limit torque L as desired and a value below the above-mentioned maximum torque may be set.

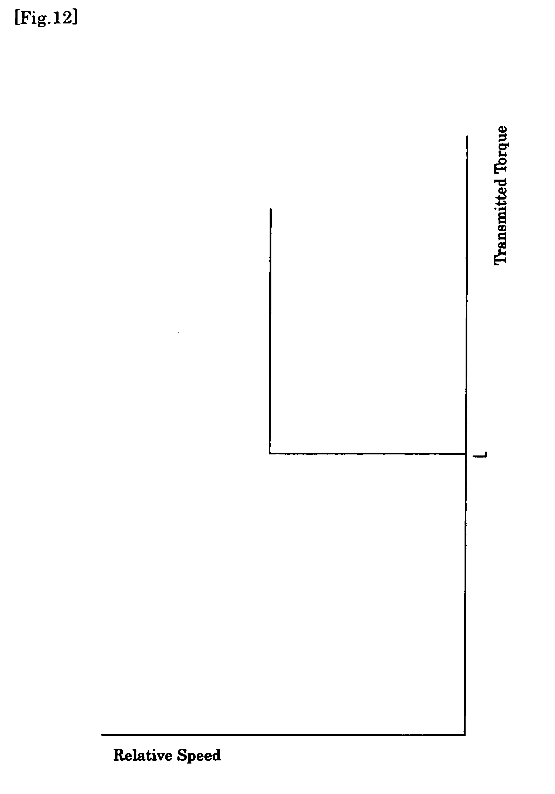

In the present embodiment, a manner in which the third reduction gear 81 g and the third shaft 81c constituting the torque limiter 88 slip is not particularly limited. The above-mentioned slip operation may be performed in a manner as shown in Fig. 12. Fig. 12 shows a correlation diagram of the transmitted torque and the slip speed, with the torque to be transmitted by the shift power transmission mechanism 80 being on the abscissa and the relative speed between the third reduction gear 81 g and the third shaft 81 c being on the ordinate. As shown in Fig. 12, the third reduction gear 81 g and the third shaft 81 c do not relatively rotate until the torque to be transmitted by the shift power transmission mechanism 80 reaches the predetermined limit torque L. When the torque to be transmitted by the shift power transmission mechanism 80 exceeds the limit torque L, the torque limiter 88 functions, causing relative rotation of the third reduction gear 81g and the third shaft 81 c. As a result, the torque transmitted between the third reduction gear 81 g and the third shaft 81 c is kept not more than the limit torque L. According to the present embodiment, thus, the torque limiter 88 functions to limit the torque transmitted by the shift power transmission mechanism 80 to the limit torque L or less. As a result, the torque transmitted by the shift power transmission mechanism 80 will not exceed and increase the limit torque L.

The relationship between the transmitted torque and the slip speed is not limited to that shown in Fig. 12. In other words, the relative rotational speed between the third reduction gear 81g and the third shaft 81 c is not to the one as shown in Fig. 12 where after the torque to be transmitted exceeds the limit torque L, the torque increases in a step-like manner. For example, the above-mentioned relative rotational speed may increase gradually after the torque to be transmitted exceeds the limit torque L.

As described above, even when the transmission 40 may not operate smoothly for some reason, the torque limiter 88 limits the torque to be transmitted by the shift power transmission mechanism 80 to the limit torque L or less. This limits the load on the shift motor 70 to suppress the overloaded condition of the shift motor 70. This also limits the force exerted on the speed change gears 49 and 420 to prevent the gear shifting operation from stopping due to the excessive force on the speed change gears 49 and 420. Accordingly, the speed change gears 49 and 420 may eventually be disengaged or engaged to be fixed to the main shaft 41 and the drive shaft 42, thereby completing the gear shifting operation.

After the speed change gears are switched as described above, the clutch mechanism 44 is made from disconnected to connected. Connection operation of the clutch mechanism 44 will be described below.

Upon switching of the speed change gears being completed, the engine controller 95 drives and rotates the clutch motor 60 in the reverse direction. As a result, the output shaft 60g of the clutch motor 60 gradually moves to the right in FIG. 3, and the piston 60l moves to the right in FIG. 3. Movement of the piston 60l causes the oil flows from the space 467 surrounded by the cylinder body 465 and the piston 463 to the oil chamber 60n through the oil hose 60q.

The oil causes the piston 463 biased by the pressure plate 451 and the springs 450 to gradually move to the left in Fig. 3. The pressure plate 451 also moves gradually to the left in Fig. 3. The pressing member 451B of the pressure plate 451 comes in contact with the friction disc 445 and pushes the friction disc 445 to the left in Fig. 3. As a result, the friction discs 445 and the clutch plates 449 are sandwiched by the pressing member 447B of the clutch boss 447 and the pressing member 451 B of the pressure plate 451 so that the frictional force is generated between each friction disc 445 and each clutch plate 449. As the pressure plate 451 further moves to the left in Fig. 3, the frictional force generated between each friction disc 445 and each clutch plate 449 increases due to the biasing force of the springs 450. As a result, slip hardly occurs between the friction discs 445 and the clutch plates 449 and a sufficient frictional force to transmit the torque from the clutch housing 443 to the clutch boss 447 is generated between friction disc 445 and clutch plate 449. In this way, the clutch mechanism 44 is again connected.

As described above, the automated shift control device 50 of the present embodiment includes the torque limiter 88 provided within the shift power transmission mechanism 80 and for transmitting the power of the shift motor 70 as the torque and limiting the torque to be transmitted to the predetermined limit torque L or less when the torque to be transmitted exceeds the predetermined limit toque L. The third reduction gear 81 g of the torque limiter 88 co-rotates with the third shaft 81 c when the torque to be transmitted is not more than the predetermined limit torque L, and rotates relative to the third shaft 81 c when the torque to be transmitted exceeds the predetermined limit torque L. In other words, the third reduction gear 81g and the third shaft 81c rotate at the same speed when the torque to be transmitted is not more than the predetermined limit torque L and, relatively rotate when torque to be transmitted exceeds the predetermined limit torque L. Therefore, even when the torque to be transmitted by the shift power transmission mechanism 80 temporarily exceeds the predetermined limit torque L, relative rotation of the third reduction gear 81 g and the third shaft 81 c limits the torque to the predetermined limit torque L or less. Therefore, overload of the shift motor 70 can be restricted.

Moreover, the automated shift control device 50 according to the present embodiment restricts overload of the shift motor 70 without restricting the torque of the shift motor itself or using a torque limiter formed of, for example, an elastic member of a small elastic modulus. Accordingly, it is possible to shorten the time from beginning to completion of the gear shifting operation. Therefore, with the automated shift control device 50 according to the present embodiment, suppression of overload of the shift motor 70 and reduction in time for gear shifting can be achieved at the same time.

In the automated shift control device 50 according to the present embodiment, the third shaft 81 c and the third reduction gear 81 g press-fitted to the third shaft 81 c form the torque limiter 88. The third reduction gear 81 g and the third shaft 81 c co-rotate when the torque transmitted from the third reduction gear 81g to the third shaft 81 c is not more than the predetermined limit torque L, and the third reduction gear 81 g rotates relative to the third shaft 81c to relieve part of the torque to the outside of the shift power transmission mechanism 80 when the torque to be transmitted from the third reduction gear 81 g to the third shaft 81 c exceeds the predetermined limit torque L. In this way, with the automated shift control device 50, a simple configuration can limit the torque transmitted by the shift power transmission mechanism 80 to the predetermined limit torque L or less even when the torque to be transmitted exceeds the predetermined limit torque L and, therefore, can limit overload of the shift motor 70.

With the automated shift control device 50, the third reduction gear 81 g and the third shaft 81c are arranged not to relatively rotate when the torque to be transmitted is not more than the predetermined limit torque L. Accordingly, when the third reduction gear 81 g rotates relative to the third shaft 81 c so that the transmitted torque is reduced to the predetermined torque L or less, the third reduction gear 81 g and the third shaft 81 c revert to the original state and do not relatively rotate. Thus, the torque limiter 88 of the automated shift control device 50 can be used multiple times, and can be used to limit overload of the shift motor 70 multiple times without replacement.

In the automated shift control device 50, the torque limiter 88 is formed of the third reduction gear 81 g and the third shaft 81c which are one of the reduction gears 81 e to 81 g and one of the shaft 81 a to 81 c, both forming the reduction mechanism 81. In other words, in the automated shift control device 50, the torque limiter 88 is formed of a part of the reduction mechanism 81. Therefore, it is possible to simply form the torque limiter 88. Moreover, it is possible to add the above-mentioned torque limiting function to an existing reduction mechanism 81 without providing the torque limiter 88 separately. Thus, the automated shift control device 50 can prevent increase in the number of components and in size of the device due to addition of the torque limiting function.

In the present embodiment, the predetermined limit torque L is adjusted according to the press-fit interference (i.e., diameter of the shaft / diameter of the pres-fitted gear). Therefore, the smaller the inner diameter of the pres-fitted gear is, the more the adjustment of the limit torque L may be influenced by deviation between actual and target interferences (i.e., tolerance of the press-fit interference).

Thus, in the automated shift control device 50, the torque limiter 88 is formed of the third reduction gear 81 g and the third shaft 81c, both of which are most downstream of the reduction gears 81 e to 81 g and the shaft 81 a to 81c forming the reduction mechanism 81. The third reduction gear 81g is located most downstream and has the largest diameter among the three reduction gears 81 e to 81 g so that the tolerance of the press-fit interference less influences adjustment of the limit torque L. In this way, the automated shift control device 50 facilitates adjustment of the limit torque L and production of the torque limiter 88.

In the automated shift control device 50, the surface of the press-fitted portion 81 p of the third shaft 81 c to which the third reduction gear 81 g is press-fitted is corbett-treated (i.e., sulphurized at a low temperature) to form a sulphurized layer having self-lubrication properties on the surface of the press-fitted portion 81 p. Thus, an excessive torque may be suitably reduced. Therefore, the configuration to limit overload of the shift motor 70 is easily provided. Since the torque limiting function is provided by the corbett-treatment (i.e., sulphurizing at a low temperature) of the existing component without adding a member having self-lubrication properties, the torque limiter 88 is easily formed.

The automated shift control device 50 also includes the stopper mechanism 87. Therefore, it is possible to restrict rotation of the third shaft 81 c such that the third shaft 81 c at one end of which the shift position detecting device (angle sensor) S2 is attached does not rotate to an angular position out of the sensing region of the shift position detecting device (angle sensor) S2.

While the rotating part of the stopper mechanism 87 is formed of the actuating lever 84 and the stationary part of the stopper mechanism 87 is formed of the stopper members 89 and 89 in the present embodiment, it is contemplated that the rotating part may be provided on the third reduction gear 81g and the stopper members as a stationary part may be provided inside the gear case 81h. However, in the present embodiment, the torque limiter 88 is formed of the third reduction gear 81 g and the third shaft 81 c, and the third reduction gear 81 g rotates relative to the third shaft 81 c when the transmitted torque exceeds the predetermined limit torque L. Thus, since the angular position between the shift position detecting device (angle sensor) S2 and the rotating part is shifted, the function as the stopper cannot be obtained.

However, in the automated shift control device 50 according of the present embodiment, the rotating part of the stopper mechanism 87 is formed of the actuating lever 84, and is attached to the third shaft 81c. Thus, the angular position between the shift position detecting device (angle sensor) S2 and actuating lever 84 as the rotating part does not shift even when the third reduction gear 81 g rotates relative to the third shaft 81 c upon the operation of the torque limiter 88. Accordingly, it is possible to form the torque limiter 88 from the third reduction gear 81 g and the third shaft 81 c and demonstrate the function of the stopper mechanism 87.

Moreover, according to the motorcycle 1, since the automated shift control device 50 is provided, the straddle-type vehicle can be provided in which the time from beginning to completion of the gear shifting operation can be shortened while overload of the shift motor 70 can be suppressed.

In the present embodiment, the torque limiter 88 is formed of the third reduction gear 81g and the third shaft 81 c which are located most downstream among the reduction gears 81e to 81g and the shaft 81a to 81c of the reduction mechanism 81. However, the torque limiter is not limited thereto. The torque limiter 88 may formed of the second reduction gear 81f and the second shaft 81 b of the reduction mechanism 81, or formed of the first reduction gear 81e and the first shaft 81a of the reduction mechanism 81. Alternatively, the torque limiter 88 may formed of the actuating lever 84 and the third shaft 81c. Specifically, the actuating lever 84 may be pres-fitted to the third shaft 81c such that the actuating lever 84 and the third shaft 81c co-rotate when the torque is not more than the predetermined limit L, and relatively rotate when the torque exceeds the predetermined limit torque L. Alternatively, the torque limiter 88 may be formed of the actuating lever 85 and the shift actuating shaft 83a. Specifically, the actuating lever 85 may be pres-fitted to the shift actuating shaft 83a such that the actuating lever 85 and the shift actuating shaft 83a co-rotate when the torque is not more than the predetermined limit L, and the actuating lever 85 and the shift actuating shaft 83a relatively rotate when the torque exceeds the predetermined limit torque L.

Moreover, the torque limiter 88 according to the present embodiment is not limited to such one, in which the torque is transmitted due to the frictional force generated between the first rotating member at the input side (i.e., third reduction gear 81g) and the second rotating member at the output side (i.e., third shaft 81c), and the torque is relieved when exceeding the predetermined limit torque L by slipping the first rotating member relative to the second rotating member. For example, in an automated shift control device not covered by the independent claim, the torque limiter may be the one in which the first rotating member at the input side and the second rotating member at the output side engage with each other to transmit the torque, the first rotating member and the second rotating member temporarily disengage to relatively rotate when the torque to be transmitted exceeds the predetermined limit torque L, and again engage with each other when having relatively rotate by the predetermined angle. Specifically, an example of such a torque limiter may be as follows.

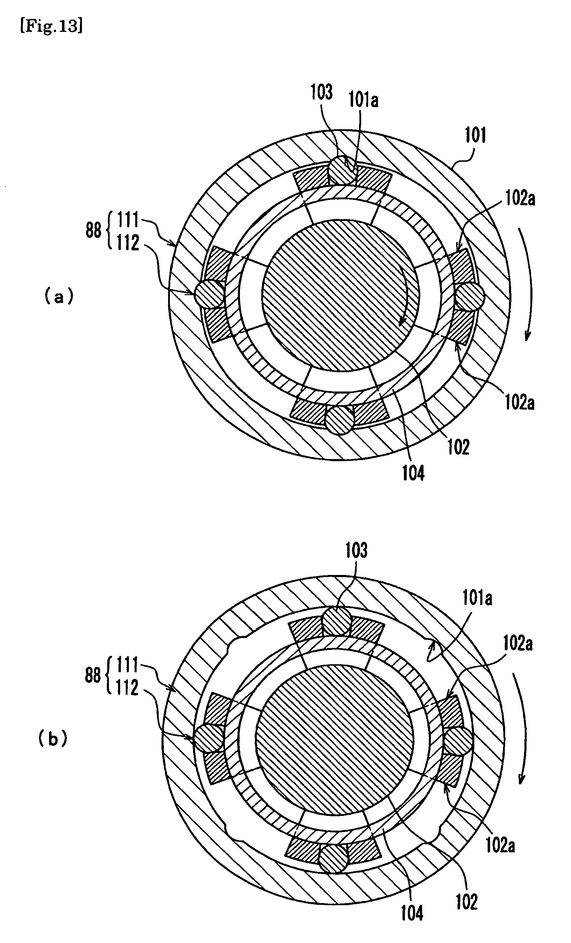

As shown in Fig. 13(a), a torque limiter 88 includes a rotating body 101, a rotating body 102, engaging members 103 and a coil spring 104. The rotating body 101 is provided with engaging holes 101 a for engaging with the engaging members 103. The rotating body 102 is provided with restricting members 102a which restrict movement of the engaging members 103 in a circumferential direction of the rotating body 102. The coil spring 104 is provided between the rotating body 101 and the rotating body 102 and provided to press the engaging members 103 against the rotating body 101. The rotating body 101 constitutes a first rotating member 111, whereas the rotating body 102, the engaging members 103 and the coil spring 104 forms a second rotating member 112. In this embodiment, the torque limiter 88 is engagement-based. Also, combinations of engagement-based and friction-based torque limiters may be possible.

With such a configuration, in the state that the engaging member 103 engages with the engaging holes 101a of the rotating body 101,the first rotating member 111 and the second rotating member 112 are engaged with each other via the engaging members 103 so that the first rotating member 111 and the second rotating member 112 cannot relatively rotate. When the rotating body 101 rotates in this engaged state, the torque from the rotating body 101 is transmitted to the rotating body 102 via the engaging members 103, and the rotating body 102 rotates.

On the other hand, when the torque from the rotating body 101 to the rotating body 102 exceeds the predetermined limit torque L, wall surfaces of the engaging holes 101 a of the rotating body 101 press the engaging members 103 to the rotating body 102 against a biasing force from the coil spring 104. As a result, the engaging members 103 disengage from the engaging holes 101 a so that the engagement between the rotating body 101 and the engaging member 103 is released. Thus, the engaged state between the first rotating member 111 and the second rotating member 112 is released. As a result, the first rotating member 111 rotates relative to the second rotating member 112 (see Fig. 13(b)).

When the rotating body 101 of the first rotating member 111 rotates by a predetermined angle (approximately 90 degrees in Fig. 13), each engaging member 103 fits into another engaging hole 101a. Thus, the first rotating member 111 and the second rotating member 112 are again engaged, disabling relative rotation.

As described above, the torque limiter 88 may be formed of the first rotating member 111 and the second rotating member 112, which are engaged with each other and co-rotate when the transmitted torque is not more than the predetermined limit torque L, disengaged and relatively rotate when the transmitted torque exceeds the predetermined limit torque L, and are again engaged and co-rotate when having rotated by the predetermined angle. Also according to such an embodiment, when the torque to be transmitted by the shift power transmission mechanism 80 temporarily exceeds the predetermined limit torque L for some reason, engagement of the first rotating member 111 with the second rotating member 112 is released to allow relative rotation of both members so that the torque is limited to the predetermined limit torque L or less. Therefore, overload of the shift motor 70 can be restricted. Moreover, since the first rotating member 111 and the second rotating member 112 are again engaged when relatively rotating by the predetermined angle, it is possible to limit overload of the shift motor 70 multiple times.

The torque limiter 88 may have another structure. For example, known torque limiters disclosed in Japanese Unexamined Patent Publication No. 10-252773 (two-way torque limiter), Japanese Unexamined Patent Publication No. 2006-38039 (torque limiter with a C-shaped spring), Japanese Unexamined Patent Publication No.2006-170248 (torque limiter with two pairs of grooves holding elastic material installed across each pair of grooves) may be used as the torque limiter 88.

As described above, the present teaching may be useful for the automated shift control device which automatically performs gear shifting operation of a transmission and for the straddle-type vehicle provided with the automated shift control device.

Among others, the description above discloses an embodiment of an automated shift control device, comprising: a transmission including a plurality of pairs of speed change gears and a gear selecting mechanism for selecting a pair of speed change gears to transmit power among the plurality of pairs, the plurality of pairs having transmission gear ratios that are different from one another; a shift actuator for generating power to drive the gear selecting mechanism; a shift power transmission mechanism for transmitting the power from the shift actuator to the gear selecting mechanism; and a torque limiter forming a part of the shift power transmission mechanism and having a first rotating member to which the power from the shift actuator is transmitted and a second rotating member to which the power transmitted to the first rotating member is transmitted from the first rotating member as a torque wherein when the torque to be transmitted to the second rotating member equals to or less than a predetermined limit torque, the first rotating member co-rotates with the second rotating member to transmit the power from the shift actuator to the second rotating member as the torque, and when the torque to be transmitted to the second rotating member exceeds the predetermined limit torque, the first rotating member rotates relative to the second rotating member to limit the transmitted torque to the predetermined limit torque or less.

Preferably, the first rotating member and the second rotating member are in contact with each other, and the first rotating member transmits the power from the shift actuator to the second rotating member as the torque due to the frictional force generated between the first rotating member and the second rotating member, and when the torque to be transmitted to the second rotating member exceeds the predetermined limit torque, the first rotating member slips relative to the second rotating member.

Preferably, the shift power transmission mechanism comprises a reduction mechanism having a plurality of shafts and a plurality of reduction gears respectively press-fitted to the plurality of shafts, the first rotating member is a single reduction gear of the plurality of reduction gears, and the second rotating member is a shaft of the plurality of shafts to which the reduction gear that is the first rotating member is press-fitted.

Further, preferably the shift power transmission mechanism comprises a reduction mechanism having a plurality of shafts and a plurality of reduction gears respectively press-fitted to the respective shafts, the first rotating member is a most downstream reduction gear of the plurality of reduction gears, and the second rotating member is a shaft of the plurality of shaft to which the reduction gear that is the first rotating member is press-fitted.

Preferably, a layer having self-lubrication properties is formed on a surface of a portion of the second rotating member to which the first rotating member is press-fitted.

Further, preferably the surface of the portion of the second rotating member to which the first rotating member is press-fitted is subjected to sulphurizing at a low temperature.

The automated shift control device preferably further comprises: an angle sensor for detecting an angular position attached to the second rotating member; and a stopper mechanism for restricting rotation of the second rotating member to avoid rotation of the second rotating member to the angular position out of a detection area of the angle sensor; wherein the stopper mechanism has a rotating part that is attached to the second rotating member and co-rotates with the second rotating member, and a stationary part that is formed separately from the rotating part and abuts to the rotating part to restrict rotation of the second rotating member within a predetermined angular range.

A straddle-type vehicle preferably comprises an automated shift control device according to any one of the embodiments above.

In order to provide an automated shift control device in which overload of the shift motor is suppressed while time from beginning to completion of gear shifting operation is reduced, the following is suggested:

The automated shift control device comprises: a transmission having a plurality of pairs of speed change gears and a gear selecting mechanism; a shift motor 70 for driving the gear selecting mechanism; a shift power transmission mechanism 80 for transmitting the power from the shift motor 70 to the gear selecting mechanism; and a torque limiter 88 having a third reduction gear 81g and a third shaft 81 c forming a part of the shift power transmission mechanism 80. The torque limiter 88 transmits the power from the shift motor 70 as a torque. When the transmitted torque is not more than a predetermined limit torque L, the third reduction gear 81 g co-rotates with the third shaft 81 c. When the transmitted torque exceeds the predetermined limit torque L, the third reduction gear 81g rotates relative to the third shaft 81 c to limit the transmitted torque to the predetermined limit torque L or less.

## Claims

1. Automated shift control device, comprising:
a gear selecting mechanism (43) configured to select a pair of gears (49) of a transmission (40) to transmit driving power from an input to an output of the transmission (40);
a shift actuator (70) configured to generate power to drive the gear selecting mechanism (43);
a shift power transmission mechanism (80) configured to transmit the power from the shift actuator (70) to the gear selecting mechanism (43); and
a torque limiter (88) having a first rotating member (81g) to which the power from the shift actuator (70) is transmittable and a second rotating member (81c) to which the power from the first rotating member (81g) is transmittable, the first rotating member (81g) co-rotating with the second rotating member (81c) to transmit the power from the shift actuator (70) to the second rotating member (81 c) as torque, when the torque to be transmitted to the second rotating member (81 c) equals to or less than a predetermined limit torque, the first rotating member (81g) rotating relative to the second rotating member (81 c) to limit the transmitted torque to the predetermined limit torque or less when the torque to be transmitted to the second rotating member (81 c) exceeds the predetermined limit torque, wherein the torque limiter (88) is friction-based, and the first rotating member (81g) is configured to transmit power from the shift actuator (70) to the second rotating member (81c) as torque due to frictional force generated between the first rotating member (81g) and the second rotating member (81 c), and when the torque to be transmitted to the second rotating member (81 c) exceeds the predetermined limit torque, the first rotating member (81g) slips relative to the second rotating member (81c),
**characterized in that**
a layer having self-lubrication properties is formed between the first rotating member (81g) and the second rotating member (81c), and the layer is a sulphurized layer (81 x) formed on a surface portion of the first rotating member (81 g) and/or the second rotating member (81 c).

2. Automated shift control device according to claim 1, **characterized in that** the torque limiter (88) is included in the shift power transmission mechanism (80).

3. Automated shift control device according to claim 1 or 2, **characterized in that** the first rotating member (81g,111) and the second rotating member (81c,112) are in contact with each other.

4. Automated shift control device according to one of claims 1 to 3, **characterized in that** the first rotating member (81g) and the second rotating member (81c) are press-fitted to each other.

5. Automated shift control device according to one of claims 1 to 4, **characterized in that** the shift power transmission mechanism (80) comprises a reduction mechanism (81) having a plurality of shafts (81a-81c) and a plurality of reduction gears (81e-81g) which are, preferably, press-fitted to the respective shafts (81a-81c), the first rotating member (81g,111) is a reduction gear of the plurality of reduction gears (81e-81g), and the second rotating member (81c,112) is a shaft of the plurality of shafts (81 a-81 c) to which the first rotating member (81 g) is, preferably, press-fitted.

6. Automated shift control device according to claim 5, **characterized in that** the first rotating member (81g) is the most downstream reduction gear of the plurality of reduction gears (81e-81g).

7. Automated shift control device according to claim 5 or 6, **characterized in that** the first rotating member (81g) has the largest diameter among the plurality of reduction gears (81e-81g).

8. Automated shift control device according ot one of claims 1 to 7, **characterized in that** the torque limiter (88) includes a shaft (81c,83a) as second rotating member and an actuating lever (84,85) as first rotating member, preferably, press-fitted to the shaft (81c,83a).

9. Automated shift control device according to one of claims 1 to 8, **characterized in that** an angle sensor (S2) is configured to detect an angular position of the second rotating member (81 c), and, preferably, a stopper mechanism (87) configured to restrict rotation of the second rotating member (81 c) within a detection area of the angle sensor (S2), the stopper mechanism (87) preferably having a rotating part (84), preferably the actuating lever (84), that is attached to the second rotating member (81 c) so as to co-rotate with the second rotating member (81 c), and a stationary part (89) that is formed separately from the rotating part (84) and abuts to the rotating part (84) to restrict rotation of the second rotating member (81c) within a predetermined angular range.

10. Vehicle, in particular a straddle-type vehicle such as a motorcycle, comprising a transmission (40) and an automated shift control device (50) according to one of claims 1 to 9.

## Patentansprüche

1. Automatische Schaltsteuerungsvorrichtung, aufweisend:
eine Zahnradwahlvorrichtung (43), konfiguriert, ein Zahnradpaar (49) eines Getriebes (40) auszuwählen, um eine Antriebsleistung von einem Eingang zu einem Ausgang des Getriebes (40) zu übertragen;
einen Schaltbetätiger (70), konfiguriert, eine Leistung zu erzeugen, um die Zahnraswahlvorrichtung (43) anzutreiben;
eine Schaltleistungs- Übertragungsvorrichtung (80), konfiguriert, die Leistung von dem Schaltbetätiger (70) zu der Zahnradwahlvorrichtung (43) zu übertragen; und
einen Drehmomentbegrenzer (88) mit einem ersten Drehteil (81g), zu dem die Leistung von dem Schaltbetätiger (70) übertragbar ist, und einem zweiten Drehteil (81c), zu dem die Leistung von dem ersten Drehteil (81 g) übertragbar ist, wobei das erste Drehteil (81g) mit dem zweiten Drehteil (81c) gleichläufig ist, um die Leistung von dem Schaltbetätiger (70) zu dem zweiten Drehteil (81 c) als Drehmoment zu übertragen, wenn das zu übertragende Drehmoment zu dem zweiten Drehteil (81 c) gleich zu oder kleiner als ein vorbestimmtes Grenzdrehmoment ist, wobei sich das erste Drehteil (81 g) in Bezug auf das zweite Drehteil (81 c) dreht, um das übertragenen Drehmoment auf das vorbestimmte Grenzdrehmoment oder kleiner zu begrenzen, wenn das Drehmoment, das zu dem zweiten Drehteil (81c) übertragen wird, das vorbestimmte Grenzdrehmoment überschreitet, wobei der Drehmomentbegrenzer (88) reibungsbasiert ist, und das erste Drehteil (81 g) konfiguriert ist, Leistung von dem Schaltbetätiger (70) zu dem zweiten Drehteil (81c) als Drehmoment infolge der Reibungskraft, erzeugt zwischen dem ersten Drehteil (81 g) und dem zweiten Drehteil (81 c), zu übertragen und wenn das zu dem zweiten Drehteil (81 c) zu übertragende Drehmoment das vorbestimmte Grenzdrehmoment überschreitet, das ersten Drehteil (81 g) in Bezug zu dem zweiten Drehteil (81 c) rutscht,
**dadurch gekennzeichnet, dass**
eine Schicht, die selbstschmierende Eigenschaften hat, zwischen dem ersten Drehteil (81 g) und dem zweiten Drehteil (81 c) gebildet ist, und die Schicht eine sulphurierte Schicht (81 x) ist, gebildet auf einem Oberflächenabschnitt des ersten Drehteils (81 g) und / oder des zweiten Drehteils (81 c).

2. Automatisierte Schaltsteuerungsvorrichtung nach Anspruch 1, **dadurch gekennzeichnet, dass** der Drehmomentbegrenzer (88) in der automatisierten Schaltsteuerungsvorrichtung (80) enthalten ist.

3. Automatisierte Schaltsteuerungsvorrichtung nach Anspruch 1 oder 2, **dadurch gekennzeichnet, dass** das erste Drehteil (81 g, 111) und das zweite Drehteil (81 c, 112) miteinander in Kontakt sind.

4. Automatisierte Schaltsteuerungsvorrichtung nach einem der Ansprüche 1 bis 3, **dadurch gekennzeichnet, dass** das erste Drehteil (81 g) und das zweite Drehteil (81 c) miteinander presseingesetzt sind.

5. Automatisierte Schaltsteuerungsvorrichtung nach einem der Ansprüche 1 bis 4, **dadurch gekennzeichnet, dass** die Schaltleistungs- Übertragungsvorrichtung (80) eine Untersetzungsvorrichtung (81) aufweist, die eine Mehrzahl von Wellen (81a - 81c) und eine Mehrzahl von Untersetzungszahnrädern (81e - 81g) hat, die vorzugsweise auf die jeweiligen Wellen (81a - 81c) aufgepresst sind, wobei das erste Drehteil (81 g, 111) ein Untersetzungszahnrad der Mehrzahl von Untersetzungszahnrädern (81 e - 81 g) ist und das zweite Drehteil (81 c, 112) eine Welle der Mehrzahl von Wellen (81 a - 81 c) ist, auf die das erste Drehteil (81 g), aufgepresst ist.

6. Automatisierte Schaltsteuerungsvorrichtung nach Anspruch 5, **dadurch gekennzeichnet, dass** das erste Drehteil (81 g) das am weitesten stromabwärtige Untersetzungszahnrad der Mehrzahl der Untersetzungszahnräder (81 e - 81 g) ist.

7. Automatisierte Schaltsteuerungsvorrichtung nach Anspruch 5 oder 6, **dadurch gekennzeichnet, dass** das erste Drehteil (81 g) den größten Durchmesser unter der Mehrzahl der Untersetzungszahnräder (81e - 81g) hat.

8. Automatisierte Schaltsteuerungsvorrichtung nach einem der Ansprüche 1 bis 7, **dadurch gekennzeichnet, dass** der Drehmomentbegrenzer (88) eine Welle (81 c, 83a) als zweites Drehteil und einen Betätigungshebel (84, 85) als erstes Drehteil, vorzugsweise auf die Welle (81 c, 83a) aufgepresst, enthält.

9. Automatisierte Schaltsteuerungsvorrichtung nach einem der Ansprüche 1 bis 8, **dadurch gekennzeichnet, dass** ein Winkelsensor (S2) konfiguriert ist, eine Winkelposition des zweiten Drehteils (81c) zu erfassen und, vorzugsweise, eine Anschlagvorrichtung (87), konfiguriert, die Drehung des zweiten Drehteils (81 c) innerhalb eines Erfassungsbereiches des Winkelsensors (S2) zu begrenzen, wobei die Anschlagvorrichtung (87) vorzugsweise ein Drehteil (84) hat, vorzugsweise den Betätigungshebel (84), der mit dem zweiten Drehteil (81 c) verbunden ist, um mit dem zweiten Drehteil (81c) gemeinsam sich zu drehen, und ein stationäres Teil (89), das separat von dem Drehteil (84) gebildet ist und gegen das Drehteil (84) anschlägt, um die Drehung des zweiten Drehteils (81c) innerhalb eines vorbestimmten Winkelbereiches zu begrenzen.

10. Fahrzeug, insbesondere ein Fahrzeug vom Grätschsitz- Typ, wie z. B. ein Motorrad, aufweisend ein Getriebe (40) und eine automatische Schaltsteuerungsvorrichtung nach einem der Ansprüche 1 bis 9.

## Revendications

1. Dispositif de commande de boîte de vitesse automatisée comprenant :
un mécanisme de sélection de vitesse (43) configuré pour sélectionner une paire d'engrenages (49) d'une transmission (40) pour transmettre une puissance motrice d'une entrée à une sortie de la transmission (40) ;
un actionneur de changement de vitesse (70) configuré pour générer une puissance pour commander le mécanisme de sélection de vitesse (43) ;
un mécanisme de transmission de puissance de changement de vitesse (80) configuré pour transmettre la puissance de l'actionneur de changement de vitesse (70) au mécanisme de sélection de vitesse (43) ; et
un limiteur de couple (88) comportant un premier élément rotatif (81g) auquel peut être transmise la puissance provenant de l'actionneur de changement de vitesse (70) et un deuxième élément rotatif (81c) auquel peut être transmise la puissance provenant du premier élément rotatif (81g), le premier élément rotatif (81g) tournant conjointement avec le deuxième élément rotatif (81c) pour transmettre la puissance de l'actionneur de changement de vitesse (70) au deuxième élément rotatif (81c) comme un couple, quand le couple à transmettre au deuxième élément rotatif (81c) est égal ou inférieur à un couple limite prédéterminé, le premier élément rotatif (81g) tournant par rapport au deuxième élément rotatif (81c) pour limiter le couple transmis au couple limite prédéterminé ou inférieur quand le couple à transmettre au deuxième élément rotatif (81c) dépasse le couple limite prédéterminé, dans lequel le limiteur de couple (88) est basé sur la friction, et le premier élément rotatif (81g) est configuré pour transmettre une puissance de l'actionneur de changement de vitesse (70) au deuxième élément rotatif (81c) comme un couple en raison de la force de friction générée entre le premier élément rotatif (81g) et le deuxième élément rotatif (81c), et quand le couple à transmettre au deuxième élément rotatif (81c) dépasse le couple limite prédéterminé, le premier élément rotatif (81g) glisse par rapport au deuxième élément rotatif (81c),
**caractérisé en ce que**
une couche comportant des propriétés d'autolubrification est formée entre le premier élément rotatif (81g) et le deuxième élément rotatif (81c), et la couche est une couche sulfurisée (81x) formée sur une portion de surface du premier élément rotatif (81g) et/ou du deuxième élément rotatif (81c).

2. Dispositif de commande de boîte de vitesse automatisée selon la revendication 1, **caractérisé en ce que** le limiteur de couple (88) est compris dans le mécanisme de transmission de puissance de changement de vitesse (80).

3. Dispositif de commande de boîte de vitesse automatisée selon la revendication 1 ou 2, **caractérisé en ce que** le premier élément rotatif (81g, 111) et le deuxième élément rotatif (81c, 112) sont en contact l'un avec l'autre.

4. Dispositif de commande de boîte de vitesse automatisée selon l'une quelconque des revendications 1 à 3, **caractérisé en ce que** le premier élément rotatif (81g) et le deuxième élément rotatif (81c) sont emmanchés à force l'un dans l'autre.

5. Dispositif de commande de boîte de vitesse automatisée selon l'une quelconque des revendications 1 à 4, **caractérisé en ce que** le mécanisme de transmission de puissance de changement de vitesse (80) comprend un mécanisme de réduction (81) comportant une pluralité d'arbres (81a-81c) et une pluralité d'engrenages de réduction (81e-81g) qui sont, de préférence, emmanchés à force sur les arbres correspondants (81a-81c), le premier élément rotatif (81g, 111) est un engrenage de réduction de la pluralité d'engrenages de réduction (81e-81g) et le deuxième élément rotatif (81c, 112) est un arbre de la pluralité d'arbres (81a-81c) sur lequel le premier élément rotatif (81g) est, de préférence, emmanché à force.

6. Dispositif de commande de boîte de vitesse automatisée selon la revendication 5, **caractérisé en ce que** le premier élément rotatif (81g) est l'engrange de réduction le plus en aval de la pluralité d'engrenages de réduction (81e-81g).

7. Dispositif de commande de boîte de vitesse automatisée selon la revendication 5 ou 6, **caractérisé en ce que** le premier élément rotatif (81g) possède le plus grand diamètre parmi la pluralité d'engrenages de réduction (81e-81g).

8. Dispositif de commande de boîte de vitesse automatisée selon l'une quelconque des revendications 1 à 7, **caractérisé en ce que** le limiteur de couple (88) comprend un arbre (81c, 83a) comme deuxième élément rotatif et un levier d'actionnement (84, 85) comme premier élément rotatif, de préférence emmanché à force sur l'arbre (81c, 83a).

9. Dispositif de commande de boîte de vitesse automatisée selon l'une quelconque des revendications 1 à 8, **caractérisé en ce qu'**un capteur d'angle (S2) est configuré pour détecter une position angulaire du deuxième élément rotatif (81c) et, de préférence, un mécanisme d'arrêt (87) configuré pour limiter la rotation du deuxième élément rotatif (81c) dans une zone de détection du capteur d'angle (S2), le mécanisme d'arrêt (87) comportant de préférence une partie rotative (84), de préférence le levier d'actionnement (84), qui est fixé au deuxième élément rotatif (81c) de manière à tourner conjointement avec le deuxième élément rotatif (81c), et une partie fixe (89) qui est formée séparément de la partie rotative (84) et en butée contre la partie rotative (84) pour limiter la rotation du deuxième élément rotatif (81c) dans une plage angulaire prédéterminée.

10. Véhicule, en particulier un véhicule de type à chevaucher tel qu'un motocycle, comprenant une transmission (40) et un dispositif de commande de boîte de vitesse automatisée (50) selon l'une quelconque des revendications 1 à 9.
